(19) Europäisches Patentamt
European Patent Office
Office européen des brevets

(11) **EP 3 020 472 A1**

(12) **EUROPÄISCHE PATENTANMELDUNG**

(43) Veröffentlichungstag:
**18.05.2016 Patentblatt 2016/20**

(51) Int Cl.:
*B01J 20/12* (2006.01)          *A01K 1/015* (2006.01)
*B01J 20/04* (2006.01)          *B01J 20/14* (2006.01)
*B01J 20/30* (2006.01)

(21) Anmeldenummer: **14192897.8**

(22) Anmeldetag: **12.11.2014**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **H. von Gimborn GmbH**
**46446 Emmerich (DE)**

(72) Erfinder:
• **Prinsteiner, Robert**
  **933o9 Kelheim (DE)**
• **Hammerl, Rainer**
  **93o77 Bad-Abbach (DE)**

(74) Vertreter: **Andrae | Westendorp Patentanwälte**
**Partnerschaft**
**Uhlandstraße 2**
**80336 München (DE)**

(54) **Sorptionsmittel in Granulatform mit einer Mischung aus drei verschiedenen Tonmaterialien**

(57)     Die Erfindung betrifft ein Verfahren zur Herstellung eines Sorptionsmittels in Granulatform, umfassend die folgenden Schritte: (a) Bereitstellung eines ersten Tonmaterials (A) mit einer Korngröße zwischen 0,5 und 4,75 mm, wobei das Tonmaterial durch Brechen und anschließende Größenfraktionierung hergestellt wird; (b) Bereitstellen eines zweiten Tonmaterials (B) mit einer Teilchengröße zwischen 0,5 und 5,0 mm, wobei das Tonmaterial durch Brechen und anschließende Größenfraktionierung hergestellt wurde, und wobei das Tonmaterial mit einer Säure oder einem Alkalimetallsalz, insbesondere Soda, aktiviert wurde; (c) Bereitstellen eines Tonmaterials (C) mit einer Teilchengröße von 0,1 bis 3,5 mm, wobei es sich bei dem Tonmaterial um ein in einem Granuliermischer hergestelltes Rundgranulat handelt, und wobei das Tonmaterial mit einer Säure oder einem Alkalimetallsalz, insbesondere Soda, aktiviert wurde;(d) Mischen der Tonmaterialien (A), (B) und (C) in beliebiger Reihenfolge,wobei das Sorptionsmittel etwa 40 bis 60 Gewichtsanteile des Tonmaterials (A), etwa 30 bis 50 Gewichtsanteile des Tonmaterials (B) und etwa 5 bis 20 Gewichtsanteile des Tonmaterials (C) enthält.

EP 3 020 472 A1

**Beschreibung**

**Technisches Gebiet der Erfindung**

Die Erfindung betrifft ein Sorptionsmittel enthaltend drei verschiedene Tonmaterialien, ein Verfahren zu der Herstellung dieses Sorptionsmittels und die Verwendung des Sorptionsmittels als Klumpen bildende Tierstreu.
Diese Sorptionsmittel sind zur Aufnahme beliebiger Flüssigkeiten geeignet; sie eignen sich insbesondere als Streumittel für Heimtiere, weshalb sich die nachfolgenden Ausführungen auf dieses Anwendungsgebiet beziehen.

**Stand der Technik**

Besonders in städtischer Umgebung ist die Heimtierhaltung in zunehmendem Maße mit der Verwendung von Streumaterialien verbunden. Diese haben die Aufgabe, die von den Tieren abgegebenen Flüssigkeiten aufzusaugen. Sie sollten ferner den halbfesten, feuchten tierischen Exkrementen und Ausscheidungen Feuchtigkeit entziehen, um damit die Geruchsentwicklung zu vermindern. Gute Streumaterialien sollen weiterhin die abgegebenen oder entzogenen Flüssigkeiten unter Bildung eines kompakten Klumpens aufnehmen, der in einfacher und sparsamer Weise entfernt werden kann. Eine optimale Tierstreu soll somit ein hohes Saugvermögen haben und die von den Tieren abgegebenen Flüssigkeiten vollständig innerhalb der Schüttung absorbieren, ohne dass der Boden des Streubehälters benetzt wird.
Die auf dem Markt anzutreffenden Streumaterialen sind sowohl organische Materialien, wie Stroh, Sägemehl, Holzspäne, Rinden, geschreddertes Papier, Cellulosefasern, landwirtschaftliche Reststoffe als auch verschiedene anorganische Materialien, welche allein oder in Mischungen mit den genannten organischen Materialien eingesetzt werden. Der Nachteil der organischen Streumaterialien ist die oftmals nicht vorhandene oder nicht zufriedenstellende Klumpenbildung bzw. ihre Konsistenz sowie ihre Neigung zur mikrobiellen Zersetzung, insbesondere im Zusammenwirken mit Feuchtigkeit.
Als anorganische Materialien werden vor allem Tonmineralien, insbesondere Schichtsilikate, eingesetzt. Eine Besonderheit mancher Schichtsilikate ist die Fähigkeit, hohe Mengen an Feuchtigkeit aufzunehmen und zu speichern.
Im Allgemeinen eignen sich Streuen, welche auf Ton basieren sehr gut für die Verwendung als Tierstreuen durch die gute Absorption und Verklumpung von tierischen Ausscheidungen. Zur Verwendung als Tierstreuen ist es darüber hinaus wichtig, dass die Klumpenbildung bezüglich Festigkeit, Größe und Form optimiert wird, um eine einfache und sichere Entfernung der Klumpen sowie eine hohe Ergiebigkeit der Streu zu gewährleisten bei jeweils guten Geruchsbindungseigenschaften.
Allerdings konnte keine der bisher bekannten grobkörnigen Tierstreuen alle diese verschiedenen Anforderungen zugleich in sehr gutem Maße erfüllen.
Ausgehend von dem Stand der Technik ist es daher die Aufgabe der vorliegenden Erfindung, ein Verfahren zur Herstellung eines Sorptionsmittel bereitzustellen, welches bei der Benutzung als Tierstreu eine hervorragende Flüssigkeitsaufnahme und - speicherfähigkeit, sowie sehr gute Klumpenbildungseigenschaften aufweist.
Weiterhin ist es eine Aufgabe der vorliegenden Erfindung, ein solches vorteilhaftes Sorptionsmittel und dessen Verwendung bereitzustellen.

**Gegenstand der Erfindung**

Diese Aufgabe wurde durch die vorliegende Erfindung und ihre nachstehend wiedergegebenen Ausführungsformen gelöst.
Die Erfindung betrifft in einem ersten Aspekt ein Verfahren zur Herstellung eines Sorptionsmittels in Granulatform, umfassend die folgenden Schritte:

a) Bereitstellung eines ersten Tonmaterials (A) mit einer Korngröße zwischen etwa 0,5 und etwa 4,75 mm, wobei das Tonmaterial durch Brechen und anschließende Größenfraktionierung hergestellt wird;

b) Bereitstellen eines zweiten Tonmaterials (B) mit einer Teilchengröße zwischen etwa 0,5 und etwa 5,0 mm, wobei das Tonmaterial durch Brechen und anschließende Größenfraktionierung hergestellt wurde, und wobei das Tonmaterial mit einer Säure oder einem Alkalimetallsalz, insbesondere Soda, aktiviert wurde;

c) Bereitstellen eines Tonmaterials (C) mit einer Teilchengröße von etwa 0,1 bis etwa 3,5 mm, wobei es sich bei dem Tonmaterial um ein in einem Granuliermischer hergestelltes Rundgranulat handelt, und wobei das Tonmaterial mit einer Säure oder einem Alkalimetallsalz, insbesondere Soda, aktiviert wurde;

d) Mischen der Tonmaterialien (A), (B) und (C) in beliebiger Reihenfolge,

EP 3 020 472 A1

wobei das Sorptionsmittel etwa 40 bis 60 Gewichtsanteile des Tonmaterials (A), etwa 30 bis 50 Gewichtsanteile des Tonmaterials (B) und etwa 5 bis 20 Gewichtsanteile des Tonmaterials (C) enthält.

In einer bevorzugten Ausführungsform unterscheidet sich die Saugfähigkeit der Tonmaterialien (A), (B) und (C).

Bevorzugt weist das Tonmaterial (B) eine um mindestens 10%, insbesondere um mindestens 20% höhere Saugfähigkeit auf als das Tonmaterial (A).

Nach einer anderen Ausführungsform der Erfindung liegt die Saugfähigkeit des Tonmaterials (C) mindestens 10%, insbesondere mindestens 20%, vorzugsweise mindestens 30% über der Saugfähigkeit des Tonmaterials (B).

In einer weiteren bevorzugten Ausführungsform liegt die Saugfähigkeit des Tonmaterials (A) bei mindestens etwa 100%, insbesondere mindestens etwa 120%. Ein Verfahren zur Bestimmung der Saugfähigkeit ist unten angegeben.

In einer bevorzugten Ausführungsform handelt es sich bei dem den Tonmaterialien (A), (B) und (C) um Tonmaterialien, die einen smektitischen Ton, insbesondere einen bentonithaltigen Ton enthalten oder daraus bestehen.

In einer anderen bevorzugten Ausführungsform weist das Tonmaterial (B) einen höheren Anteil an einwertigen Zwischenschichtkationen als das Tonmaterial (A) auf.

In einer weiteren bevorzugten Ausführungsform dieses Sorptionsmittels weist das Tonmaterial (C) einen höheren Anteil an einwertigen Zwischenschichtkationen als das Tonmaterial (B) auf.

In einer weiteren bevorzugten Ausführungsform handelt es sich um eine bei der Aufnahme von Flüssigkeit Klumpen bildende Tierstreu.

In einer weiteren bevorzugten Ausführungsform machen die Tonmaterialanteile (A), (B) und (C) in dem Sorptionsmittel zusammen mindestens 80 Gew.-%, insbesondere mindestens 90 Gew.-%, vorzugsweise mindestens 95 Gew.-% bezogen auf das Gesamtgewicht des Sorptionsmittels aus.

Ein wesentliches Merkmal der vorliegenden Erfindung ist es, dass die Tonmaterialien (A) und (B) durch Brechen aus größeren Tonteilchen, Brocken oder Formkörpern hergestellt werden und somit eine verhältnismäßig unregelmäßige und von einer runden Form abweichende Gestalt aufweisen.

In einem bevorzugten erfindungsgemäßen Verfahren weisen daher maximal 30 Vol.-%, insbesondere maximal 25 Vol.-% des Tonmaterials (A) und des Tonmaterials (B) eine Zirkularität von mindestens 0,86 auf. Ein Verfahren zur Bestimmung der Zirkularität ist nachstehend angegeben.

In einem weiteren bevorzugten erfindungsgemäßen Verfahren weisen maximal 35 Vol.-% der Teilchen des Teilchenmaterials (A) und des Teilchenmaterials (B) ein Aspektverhältnis von 1,2 oder darunter auf. Das Aspektverhältnis ist dabei das Verhältnis der maximalen Länge zur minimalen Breite eines Teilchens. Ein Verfahren zur Bestimmung des Aspektverhältnisses ist nachstehend angegeben.

Ein weiteres wesentliches Merkmal der vorliegenden Erfindung ist es, dass die Teilchen des Tonmaterials (C) eine runde Form aufweisen, wie sie beispielsweise durch einen Granuliermischer erzeugt werden kann. Es können alle üblichen Granuliermischer verwendet werden, die dem Fachmann bekannt sind und die für die Granulation von teilchenförmigen Tonmaterialien geeignet sind. Grundsätzlich kann aber nach einem Aspekt der Erfindung auch einen anderes Verfahren zur Herstellung des runden Tonmaterials (C) verwendet werden, das dem Fachmann geläufig ist.

In einem bevorzugten erfindungsgemäßen Verfahren weisen mindestens 50 Vol.-%, insbesondere mindestens 60 Vol.-% der Teilchen des Tonmaterials (C) eine Zirkularität von mindestens 0,86 auf.

In einem bevorzugten erfindungsgemäßen Verfahren weisen mindestens 40 Vol.-% der Teilchen des Tonmaterials (C) ein Aspektverhältnis von 1,2 oder darunter auf.

Bevorzugt besteht das Soptionsmittel überwiegend, im Wesentlichen oder vollständig aus dem Tonmaterialien (A), (B) und (C). Beimengungen anderer Komponenten, wie z.B. Bindemittel, andere Sorbentien oder Geruchsbinder, Duftstoffe, Farbstoffe etc. sind jedoch möglich.

Die Erfindung betrifft in einem zweiten Aspekt ein Sorptionsmittel, hergestellt nach einem Verfahren wie hierin beschrieben, insbesondere enthaltend ein Gemisch aus den Tonmaterialien (A), (B) und (C) wie hierin beschrieben.

Die Erfindung betrifft in einem dritten Aspekt die Verwendung des erfindungsgemäßen Sorptionsmittels als bei der Aufnahme von Flüssigkeit Klumpen bildende Tierstreu.

In einer bevorzugten Ausführungsform wird das Sorptionsmittel zur Verbesserung der Klumpenbildung und/oder der Klumpenform und/oder zur Verringerung der Geruchsbildung der Tierstreu, insbesondere bei längerem Gebrauch, verwendet.

**Nähere Beschreibung der Erfindung**

Gegenüber dem bekannten Stand der Technik wurde überraschenderweise gefunden, dass die Eigenschaften eines Sorptionsmittels erheblich verbessert werden können, wenn das Sorptionsmittel in Granulatform durch Mischen der Tonrnaterialien (A), (B)und (C) hergestellt wird.

Das Sorptionsmittel der vorliegenden Erfindung liegt in Granulatform vor, das heißt in Form eines körnigen bis pulverförmigen, leicht schüttbaren Feststoffs.

Die angegebenen Teilchengrößenbereiche können nach dem Fachmann geläufigen Verfahren eingestellt bzw. klassiert werden, insbesondere durch Verwendung von Sieben mit definierter Siebmaschengröße.

Als Tonmaterial gemäß der vorliegenden Erfindung kann grundsätzlich jedes dem Fachmann geläufige Tonmaterial verwendet werden. Das Tonmaterial kann einen einzelnen Ton oder ein Tongemisch enthalten. Als Tone bzw. Tonminerale in dem verwendeten Tonmaterial werden Schichtsilicate bevorzugt, insbesondere Zweischicht- und Dreischichtsilicate. Bevorzugt sind dabei die Smektite, Vermiculite, Illite, Chlorite und Sepiolithe/Palygorskite und Attapulgite. Besonders bevorzugt enthält das Tonmaterial mindestens ein smektitisches Tonmineral wie Montmorillonit, Hektorit, Saponit, Beidellit oder Nontronit. Ein bevorzugtes Material ist Bentonit, aber auch Hectorit, Glauconit, Sauconit, Illit oder dergleichen können verwendet werden. Es können wie oben erwähnt auch Gemische verschiedener Tonmineralien eingesetzt werden.

Gemäß einer bevorzugten erfindungsgemäßen Ausführungsform enthält das Tonmaterial einen Bentonit. Bentonit besteht zum größten Teil aus Montmorillonit, wodurch die starke Feuchtigkeitsaufnahme- und Quellfähigkeit bedingt wird. Das Aluminiumsilicat Montmorillonit ist dabei ein Dreischichtmaterial, aufgebaut aus zwei $SiO_4$-Tetraederschichten, zwischen denen sich eine Oktaederschicht aus vorwiegend Aluminiumionen befindet.

Vorzugsweise wird ein Bentonit verwendet, welcher mehr als 50%, vorzugsweise mehr als 60%, weiter vorzugsweise mehr als 70%, noch weiter vorzugsweise mehr als 80% Montmorillonit enthält.

Durch isomorphen Ersatz der dreiwertigen Aluminiumionen im Montmorillonit durch zweiwertige Ionen, wie beispielsweise Calcium oder Magnesium, entsteht eine negative Überschussladung, die z.B. durch $Mg^{2+}$, $Ca^{2+}$, $Na^+$ ausgeglichen werden kann. Der Austausch mit Kationen wie $Na^+$ und $Ca^{2+}$ beeinflusst auch ganz wesentlich das Quellverhalten des Bentonits. So bewirken eingelagerte Calciumionen einen engeren schichtförmigen Aufbau, während eingelagerte Natriumionen eine offenere Schichtung des Bentonits erlauben.

Als Tonmaterial im Sinne der vorliegenden Erfindung wird bevorzugt ein Material verstanden, welches mindestens ein Tonmineral enthält, vorzugsweise zu mindestens 50%, weiter bevorzugt zu mindestens 60%, noch weiter bevorzugt zu mindestens 75%, noch weiter bevorzugt zu mindestens 85%, insbesondere zu mindestens 90% aus einem oder mehreren Tonmineralen besteht. Nach einer bevorzugten Ausführungsform der Erfindung besteht das Tonmaterial aus mindestens einem Ton oder Tonmineral.

In einer bevorzugten Ausführungsform unterscheiden sich die zwei Sorten von Teilchen des Sorptionsmittels in Granulatform darin, dass sich das in den unterschiedlichen Teilchen enthaltene Tonmaterial im Hinblick auf die Saugfähigkeit unterscheidet.

Zur Erhöhung der Saugfähigkeit wird das Tonmaterial (B) und das Tonmaterial (C) in üblicher, dem Fachmann geläufiger Weise mit einer Säure oder einem Alkalimetallsalz, insbesondere einen Natriumsalz wie Soda aktiviert.

Nach einer bevorzugten Ausführungsform ist das Tonmaterial (B) dadurch gekennzeichnet, dass es einen höheren Anteil an einwertigen Zwischenschichtkationen, wie beispielsweise $Na^+$, $K^+$, $NH_4^+$, $Li^+$ oder $H^+$, insbesondere von $Na^+$, $K^+$ oder $NH_4^+$, weiter insbesondere von $Na^+$ an der Kationenaustauschkapazität (CEC) aufweist als das Tonmaterial (A).

Nach einer weiteren bevorzugten Ausführungsform weist das Tonmaterial (A) einen höheren Anteil von zweiwertigen Kationen, wie beispielsweise $Ca^{2+}$ oder $Mg^{2+}$, insbesondere $Ca^{2+}$ an der Kationenaustauschkapazität (CEC) auf als das Tonmaterial (B).

Nach einer bevorzugten Ausführungsform ist das Tonmaterial (C) dadurch gekennzeichnet, dass es einen höheren Anteil an einwertigen Zwischenschichtkationen, wie beispielsweise $Na^+$, $K^+$, $NH_4^+$, $Li^+$ oder $H^+$, insbesondere von $Na^+$, $K^+$ oder $NH_4^+$, weiter insbesondere von $Na^+$ an der Kationenaustauschkapazität (CEC) aufweist als das Tonmaterial (B).

Nach einer weiteren bevorzugten Ausführungsform weist das Tonmaterial (B) einen höheren Anteil von zweiwertigen Kationen, wie beispielsweise $Ca^{2+}$ oder $Mg^{2+}$, insbesondere $Ca^{2+}$ an der Kationenaustauschkapazität (CEC) auf als das Tonmaterial (C).

Vorzugsweise liegt der Anteil von einwertigen Ionen an der Kationenaustauschkapazität (CEC) des Tonmaterials (C) bei mindestens 60%, noch weiter bevorzugt mindestens 80% liegt.

In einer bevorzugten Ausführungsform unterscheidet sich die Saugfähigkeit des Tonmaterials (B) um mindestens 10%, bevorzugt mindestens 20%, weiter bevorzugt mindestens 30% von der Saugfähigkeit des Tonmaterials (A), wobei die Saugfähigkeit des Tonmaterials (A) als 100% gesetzt wird.

In einer bevorzugten Ausführungsform unterscheidet sich die Saugfähigkeit des Tonmaterials (C) um mindestens 10%, bevorzugt mindestens 20%, weiter bevorzugt mindestens 30% von der Saugfähigkeit des Tonmaterials (B), wobei die Saugfähigkeit des Tonmaterials (B) als 100% gesetzt wird.

In einer anderen bevorzugten Ausführungsform unterscheidet sich die Saugfähigkeit des Tonmaterials (B) absolut um mindestens 10%, bevorzugt mindestens 20%, weiter bevorzugt mindestens 30% von der Saugfähigkeit des Tonmaterials (A), d.h. die Differenz bezieht sich absolut jeweils auf das gleiche Trockengewicht der beiden Tonmaterialien.

In einer anderen bevorzugten Ausführungsform unterscheidet sich die Saugfähigkeit des Tonmaterials (C) absolut um mindestens 10%, bevorzugt mindestens 20%, weiter bevorzugt mindestens 30% von der Saugfähigkeit des Tonmaterials (B), d.h. die Differenz bezieht sich absolut jeweils auf das gleiche Trockengewicht der beiden Tonmaterialien.

Nach einer weiteren bevorzugten Ausführungsform liegt die Saugfähigkeit bzw. Wasseraufnahmefähigkeit (bezogen auf das Trockengewicht) des Tonmaterials (A) bei mindestens etwa 100%, insbesondere mindestens etwa 120%.

Nach einer weiteren bevorzugten Ausführungsform liegt die Saugfähigkeit bzw. Wasseraufnahmefähigkeit (bezogen auf das Trockengewicht) des Tonmaterials (B) bei mindestens etwa 140%, vorzugsweise bei mindestens etwa 150%.

Nach einer weiteren bevorzugten Ausführungsform liegt die Saugfähigkeit bzw. Wasseraufnahmefähigkeit (bezogen auf das Trockengewicht) des Tonmaterials (C) bei mindestens etwa 180%, vorzugsweise bei mindestens etwa 190%.

Die Mischung der Tonmaterialien (A), (B) und (C) erfolgt mit herkömmlichen Mischvorrichtungen und soll vorzugsweise möglichst gleichmäßig sein.

Die Verwendung einer Mischung der Tonmaterialien (A), (B) und (C) Eigenschaften führt unerwarteter Weise zu einer besonders guten Klumpenbildung des erfindungsgemäßen Sorptionsmittels. Dabei zeigt sich eine besonders günstige Klumpenform und Klumpenfestigkeit bei der Aufnahme von Flüssigkeit, die kleine, feste und gut entfernbare Klumpen ermöglicht, und somit auch eine hohe Ergiebigkeit des Sorptionsmittels.

Gleichzeitig zeigen sich unerwartet gute Geruchsbindungseigenschaften.

Die einzelnen Tonmaterialien mit ihrer unterschiedlichen Oberflächenstruktur, -größe und -aktivierung wirken hier überraschend positiv zusammen. Es wird angenommen, dass dabei die beiden gebrochenen Tonmaterialien (A) und (B) zusammen mit dem Rundgranulat (C) bei der raschen und stabilen Aufnahme von Flüssigkeiten und Gerüchen besonders gut zusammenwirken.

Wie oben ausgeführt, bedingt die Kombination der hier beschriebenen Tonmaterialien (A), (B) und (C) eine Ergänzung ihrer jeweiligen Eigenschaften und zusammenwirkende und synergistische Effekte im Hinblick auf die optimale Geruchsbindung über den gesamten Nutzungszeitraum, die hervorragende Flüssigkeitsaufnahme und - speicherfähigkeit und die sehr guten Klumpenbildungseigenschaften des Sorptionsmaterials der vorliegenden Erfindung.

Weiterhin kann das erfindungsgemäße Sorptionsmittel ein oder mehrere feinteilige cellulosehaltige Materialien einschließlich von zerkleinertem Holzmaterial, Stroh oder Samen- bzw. Fruchtschalen etc. enthalten. Es können grundsätzlich alle dem Fachmann geläufigen cellulosehaltigen Materialien verwendet werden. Als feinteiliges cellulosehaltiges Material verwendet man nach einer Ausführungsform feingemahlenen Zellstoff und/oder einen Sekundärfasern enthaltenden Cellulose-Stoff, beispielsweise mit einer durchschnittlichen Faserlänge von 0,1 mm bis 2 mm. Nach einer weiteren Ausführungsform verwendet man zerkleinertes Holzmaterial, insbesondere feingemahlenes Holzmehl und/oder zerkleinerte Holzspäne. Die Teilchengröße der verwendeten feinteiligen Materialien kann weit schwanken, liegt jedoch beispielsweise bei Werten im Bereich von etwa 0,05 mm bis 3 mm, insbesondere 0,1 mm bis 2 mm.

Die Eigenschaften des erfindungsgemäßen Sorptionsmittels werden im allgemeinen wie folgt bestimmt:

### 1. Saugfähigkeit (Wasseraufnahmefähigkeit):

Nach einer Modifikation der Methode 17-A der Firma WESTINGHOUSE werden 20 g des körnigen Sorptionsmittels, welches zuvor bei 110°C bis zur Gewichtskonstanz getrocknet wurde, in ein gewogenes kegelförmiges Drahtsiebgewebe mit einem Durchmesser von 7 cm und einer Höhe von 7,6 cm eingewogen.

Das gefüllte Sieb wird dann in ein mit Wasser gefülltes Becherglas derart eingehängt, dass das Material vollständig mit Wasser bedeckt ist. Nach einer Saugzeit von 20 Minuten wird das Sieb weitere 20 Minuten in ein leeres Becherglas zum Abtropfen gehängt. Nach Beendigung der Tropfzeit wird das Sieb mit Inhalt erneut gewogen. Die Wasseraufnahmefähigkeit (%) entspricht der Gleichung 100 x E / D, wobei E die aufgesaugte Menge Wasser und D die Einwaage des körnigen Materials bedeutet.

### 2. Kationenaustauschkapazität (CEC)

Die Bestimmung der Kationenaustauschkapazität (CEC) des Tonmaterials erfolgt bevorzugt über die Ammoniumchloridmethode. Hierzu werden 5 g Tonmaterial durch ein 63 $\mu$m-Sieb gesiebt und bei 110°C getrocknet. Danach werden genau 2 g in einen Erlenmeyer-Kolben eingewogen und mit 100 ml 2N $NH_4Cl$-Lösung versetzt. Die Suspension wird unter Rückfluss 1 Stunde lang gekocht. Nach einer Standzeit von 16 Stunden bei Raumtemperatur wird das $NH_4$-ausgetauschte Tonmaterial über eine Membranfilternutsche abfiltriert und bis zur weitgehenden Ionenfreiheit mit demineralisiertem Wasser (ca. 800 ml) gewaschen.

Das ausgewaschene $NH_4$-Tonmaterial wird vom Filter abgenommen, bei 110°C 2 Stunden lang getrocknet, gemahlen, gesiebt und nochmals bei 110°C über 2 Stunden getrocknet. Danach wird der $NH_4$-Gehalt des Tonmaterials

nach Kjeldahl bestimmt. Die CEC des Tonmaterials lässt sich nach folgender Formel berechnen:

$$\text{CEC (mVal / 100 g)} = X * 1000 / 14{,}0067;$$

$X$ = Stickstoffgehalt des $NH_4$-ausgetauschten Schichtsilicats in Gewichtsprozent.

3. Absorptionstest

Auf eine eingeebnete und nicht verdichtete Schüttung des körnigen Sorptionsmittels in einer Glasschale (Durchmesser 140 mm, Höhe 75 mm, Füllhöhe 50 mm) wird Wasser aus einer 50 ml-Bürette gegeben und die Eindringtiefe beobachtet. Hierbei wird der Auslauf der Bürette in einer Höhe von 3 bis 4 cm in die Mitte der Schüttung gebracht, worauf 60 ml Leitungswasser innerhalb von 55 bis 60 Sekunden auslaufen gelassen werden. Nach einer Wartezeit von 3 Minuten wird an der Schalenunterseite geprüft, ob Wasser durch die Schicht gelaufen ist; das Durchlaufen ist an einer Verfärbung des körnigen Materials an der Schalenunterseite erkennbar. Die Auswertung wird wie folgt durchgeführt:

- Verfärbung am Schalenboden nicht sichtbar: Test bestanden;
- Verfärbung am Schalenboden sichtbar: Test nicht bestanden.

4. Klumpenbildung

Die beim Absorptionstest gebildeten Klumpen, die einen horizontalen Durchmesser von etwa 60 bis 100 mm und eine vertikale Abmessung von etwa 40 bis 70 mm haben, werden mit einer Gitterschaufel mit rautenförmigem Raster (Abmessungen der Schaufelfläche 80x120 mm; Maschenweite 11x11 mm, Stegbreite 0,3 mm) herausgenommen und die jeweilige Klumpentiefe sowie -breite gemessen. Weiterhin wird die Festigkeit der Klumpen nach folgenden Kriterien beurteilt:

Fester Klumpen:

- der Klumpen lässt sich mit der Gitterschaufel vollständig entnehmen und bleibt während und nach der Herausnahme stabil;
- der Klumpen zeigt plastisches Verhalten und zerbricht erst bei stärkerem Druck zwischen den Fingern in grössere Bruchstücke

Mässig fester Klumpen:

- der Klumpen verformt sich während und nach der Herausnahme, lässt sich aber mit der Gitterschaufel vollständig entnehmen;
- der Klumpen zerfällt bei leichtem Druck zwischen den Fingern in kleinere Bruchstücke

5. Geruchsbindung

Das Sorptionsmittel wird über einen Zeitraum von mehreren Tagen in einem Tierheim in der Praxis benutzt. Während dieses Zeitraums wird zu unterschiedlichen Zeitpunkten der Feuchtegehalt der Streu wie folgt bestimmt.
Eine Streuprobe (ohne Klumpen) wird im Trockenschrank bis zur Gewichtskonstanz getrocknet; aus der Gewichtsdifferenz vor und nach dem Trocknen wird der Gehalt an adsorbierter Feuchtigkeit bestimmt. Im Einzelnen werden 10 bis 20 g der Streu in einer flachen Schale auf 0,01 g genau eingewogen und im Trockenschrank bei 100°C bis zur Gewichtskonstanz getrocknet (mindestens 2 Stunden). Anschliessend lässt man die Probe im Exsikkator auf Raumtemperatur abkühlen und wiegt aus. Der Wassergehalt wird wie folgt berechnet:

$$\text{Wassergehalt (\%)} = [(\text{Einwaage} - \text{Auswaage}) / \text{Einwaage}] \times 100$$

Zusätzlich wird von einer Testgruppe die Geruchsbindung bzw. die subjektive Geruchswahrnehmung der Streu zu jedem Zeitpunkt beurteilt und ausgewertet.
Aus der Beurteilung der Parameter der Geruchsbindung und der Streufeuchte wird die Entwicklung der Geruchsbindung in Abhängigkeit vom Feuchtgehalt der Streu bestimmt.

5. Zirkularität und Aspektverhältnis:

Die Messung der Zirkularität (C) und des Aspektverhältnisses ((L/W) kann mit einem HAVER CPA 2-1 ONLINE Gerät zur photooptischen Partikelanalyse(Fa. Haver & Boeker OHG, Oelde, DE) nach Angaben des Herstellers erfolgen.

Die Erfindung wird durch die nicht beschränkenden, nachstehenden Beispiele näher erläutert:

Beispiel 1 - Herstellung der Granulate

Zum Zwecke der Veranschaulichung der vorliegenden Erfindung werden ein Calciumbentonit-Naturton aus einem bayrischen Abbaugebiet (Montmorillonitgehalt etwa 65 Gew.%; Saugfähigkeit ca. 123%) als Tonmaterial (A) verwendet. Das Material wurde zur Verwendung aus gröberen Brocken gebrochen und mittels Siebfraktionierung auf einen Teilchengröße von 0,5 bis 4,75 mm eingestellt. Als Tonmaterial (B) wurde das gleiche Ausgangs-Tonmaterial, jedoch nach leichter Aktivierung mit Soda zur Erhöhung der Saugfähigkeit auf 160% verwendet. Die nach der Aktivierung und Trocknung erhaltenen Pressformkörper wurden zur Verwendung gebrochen und mittels Siebfraktionierung auf einen Teilchengröße von 0,5 bis 5,0 mm eingestellt. Als Tonmaterial (C) wurde ein mit Soda aktivierter Bentonit in Form eines in einem Granuliermischer hergestellten Rundgranulats mit einer Teilchengröße zwischen 0,1 und 3,5 mm (Siebfraktionierung) mit einer Saugfähigkeit von mehr als 200% verwendet. Der Natriumionen-Anteil der CEC lag bei über 80%.

Die Tonmaterialien (A), (B) und (C) wurden innig miteinander vermischt, wobei ca. 50 Gew.-% Tonmaterial (A), ca. 40 Gew.-% Tonmaterial (B) und ca. 10 Gew.-% Tonmaterial (C) bezogen auf das Gesamtgewicht der Mischung verwendet wurden. Der Wassergehalt lag bei etwa 8 Gew.-%.

Als Vergleich wurden eine Mischung aus den gleichen Tonmaterialien (A) und (B) (50 Gew-%/50 Gew.-%) hergestellt.

In der Folge wurden die hergestellten Mischungen für Versuche eingesetzt.

Beispiel 2 - Auswirkung auf die Klumpenbildung

Die Vorteile des erfindungsgemäßen Sorptionsmittels im Hinblick auf die Klumpenbildung sind in der folgenden Tabelle dargestellt:

**Tabelle 1 - Eigenschaften der Klumpen**

|  | Vergleich | Erfindungsgemäßes Sorptionsmittel |
|---|---|---|
| Klumpenform | eher flach | Ausgewogene Breite und Tiefe |
| Speicherkapazität | gut | Sehr gut |
| Klumpengröße | größer | verhältnismäßig klein |
| Festigkeit | mäßig | fest |

Wie man aus der Tabelle ersehen kann, zeigt das erfindungsgemäße Sorptionsmittel die besten Eigenschaften in Bezug auf Klumpenform, Stabilität und auch die Entfernbarkeit bei sparsamem Verbrauch.

Beispiel 3 - Geruchsbindung

Der Wassergehalt und die Geruchsbindung werden wie oben beschrieben ermittelt. Es zeigt sich, dass die im erfindungsgemäßen Sorptionsmittel enthaltenen Tonmaterialien auch hier synergistisch zusammenwirken und eine optimale Geruchsbindung über alle Nutzungsstadien des Produktes (Nutzungsdauer) ermöglichen. Über den Anwendungszeitraum hinweg verändert sich der Feuchtegehalt der Streu und somit auch der benutzten Teilchensorten in der Streu.

Es wurde überraschend gefunden, dass das erfindungsgemäße Sorptionsmittel mit der ersten und der zweiten Teilchensorte optimale Geruchsbindungseigenschaft sowohl im unteren Feuchtebereich (zu Beginn der Nutzung des Sorptionsmittels) als auch im höheren Feuchtebereich (gegen Ende der Nutzung des Sorptionsmittels) bereitstellt. Bei der Vergleichsmischung 1 lag dagegen die Geruchsbindung über die gesamte Nutzungsdauer gesehen schlechter.

**Patentansprüche**

**1.** Verfahren zur Herstellung eines Sorptionsmittels in Granulatform, umfassend die folgenden Schritte:

a) Bereitstellung eines ersten Tonmaterials (A) mit einer Korngröße zwischen 0,5 und 4,75 mm, wobei das Tonmaterial durch Brechen und anschließende Größenfraktionierung hergestellt wird;

b) Bereitstellen eines zweiten Tonmaterials (B) mit einer Teilchengröße zwischen 0,5 und 5,0 mm, wobei das Tonmaterial durch Brechen und anschließende Größenfraktionierung hergestellt wurde, und wobei das Tonmaterial mit einer Säure oder einem Alkalimetallsalz, insbesondere Soda, aktiviert wurde;

c) Bereitstellen eines Tonmaterials (C) mit einer Teilchengröße von 0,1 bis 3,5 mm, wobei es sich bei dem Tonmaterial um ein in einem Granuliermischer hergestelltes Rundgranulat handelt, und wobei das Tonmaterial mit einer Säure oder einem Alkalimetallsalz, insbesondere Soda, aktiviert wurde;

d) Mischen der Tonmaterialien (A), (B) und (C) in beliebiger Reihenfolge,

wobei das Sorptionsmittel etwa 40 bis 60 Gewichtsanteile des Tonmaterials (A), etwa 30 bis 50 Gewichtsanteile des Tonmaterials (B) und etwa 5 bis 20 Gewichtsanteile des Tonmaterials (C) enthält.

2. Verfahren nach Anspruch 1, **dadurch gekennzeichnet, dass** das Tonmaterial (B) eine um mindestens 10%, insbesondere um mindestens 20% höhere Saugfähigkeit aufweist als das Tonmaterial (A).

3. Verfahren nach einem der vorstehenden Ansprüche, **dadurch gekennzeichnet, dass** die Saugfähigkeit des Tonmaterials (C) mindestens 10%, insbesondere mindestens 20%, vorzugsweise mindestens 30% über der Saugfähigkeit des Tonmaterials (B) liegt.

4. Verfahren nach einem der vorstehenden Ansprüche, **dadurch gekennzeichnet, dass** die Tonmaterialanteile (A), (B) und (C) in dem Sorptionsmittel zusammen mindestens 80 Gew.-%, insbesondere mindestens 90 Gew.-%, vorzugsweise mindestens 95 Gew.-% bezogen auf das Gesamtgewicht des Sorptionsmittels ausmachen.

5. Verfahren nach einem der vorstehenden Ansprüche, **dadurch gekennzeichnet, dass** mindestens 50 Vol.-%, insbesondere mindestens 60 Vol.-% der Teilchen des Tonmaterials (C) eine Zirkularität von mindestens 0,86 aufweisen, und vorzugsweise maximal 30 Vol.-%, insbesondere maximal 25 Vol.-% des Tonmaterials (A) und des Tonmaterials (B) eine Zirkularität von mindestens 0,86 aufweisen.

6. Verfahren nach einem der vorstehenden Ansprüche, **dadurch gekennzeichnet, dass** mindestens 40 Vol.-% der Teilchen des Tonmaterials (C) ein Aspektverhältnis von 1,2 oder darunter aufweisen, und vorzugsweise maximal 35 Vol.-% der Teilchen des Teilchenmaterials (A) und des Teilchenmaterials (B) eines Aspektverhältnis von 1,2 oder darunter aufweisen.

7. Sorptionsmittel, hergestellt nach einem der Ansprüche 1 bis 6, enthaltend ein Gemisch aus den Tonmaterialien (A), (B) und (C) gemäß einem der Ansprüche 1 bis 6.

8. Sorptionsmittel nach Anspruch 7, **dadurch gekennzeichnet, dass** es sich um eine bei der Aufnahme von Flüssigkeiten Klumpen bildende Tierstreu handelt.

9. Verwendung eines Sorptionsmittels gemäß Anspruch 7 oder 8 als bei der Aufnahme von Flüssigkeit Klumpen bildende Tierstreu.

10. Verwendung gemäß Anspruch 9 zur Verbesserung der Klumpenbildung und/oder der Klumpenform und /oder zur Verringerung der Geruchsbildung bei Tierstreu, insbesondere bei längerem Gebrauch.

Europäisches
Patentamt

European
Patent Office

Office européen
des brevets

**EUROPÄISCHER RECHERCHENBERICHT**

Nummer der Anmeldung

EP 14 19 2897

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/209203 A1 (OPFEL WILLIAM [US]) 13. November 2003 (2003-11-13) | 7-10 | INV. B01J20/12 |
| Y | * Ansprüche 24,25,38-47,56 *<br>* Abbildungen 4-7 *<br>* Absatz [0048] - Absatz [0050] *<br>* Absatz [0034] - Absatz [0039] *<br>* Absatz [0065] - Absatz [0066] *<br>* Absatz [0025] * | 1-6 | A01K1/015 B01J20/04 B01J20/14 B01J20/30 |
| | ----- | | |
| Y | EP 1 588 759 A2 (S & B IND MINERALS GMBH [DE]) 26. Oktober 2005 (2005-10-26)<br>* Anspruch 7 *<br>* Absatz [0018] - Absatz [0024] * | 1-6 | |
| | ----- | | |
| A | DE 42 43 390 A1 (SUED CHEMIE AG [DE]) 23. Juni 1994 (1994-06-23)<br>* das ganze Dokument * | 1-10 | |
| | ----- | | |
| A | WO 99/46979 A1 (GIMBORN INC [US]) 23. September 1999 (1999-09-23)<br>* das ganze Dokument * | 1-10 | |
| | ----- | | |

RECHERCHIERTE SACHGEBIETE (IPC)

B01J
A01K

Der vorliegende Recherchenbericht wurde für alle Patentansprüche erstellt

| Recherchenort | Abschlußdatum der Recherche | Prüfer |
|---|---|---|
| Den Haag | 29. Juni 2015 | Kaluza, Nicoleta |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                         

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 14 19 2897

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2015

| Im Recherchenbericht angeführtes Patentdokument | Datum der Veröffentlichung | Mitglied(er) der Patentfamilie | | Datum der Veröffentlichung |
|---|---|---|---|---|
| US 2003209203 A1 | 13-11-2003 | AU | 2003239133 A1 | 27-10-2003 |
| | | CA | 2481931 A1 | 23-10-2003 |
| | | MX | PA04009905 A | 16-08-2005 |
| | | US | 2003209203 A1 | 13-11-2003 |
| | | WO | 03086056 A2 | 23-10-2003 |
| EP 1588759 A2 | 26-10-2005 | EP | 1588759 A2 | 26-10-2005 |
| | | ES | 2404090 T3 | 23-05-2013 |
| DE 4243390 A1 | 23-06-1994 | AT | 153563 T | 15-06-1997 |
| | | CA | 2111914 A1 | 22-06-1994 |
| | | DE | 4243390 A1 | 23-06-1994 |
| | | EP | 0604861 A1 | 06-07-1994 |
| | | JP | 2607034 B2 | 07-05-1997 |
| | | JP | H06269660 A | 27-09-1994 |
| | | US | 5402752 A | 04-04-1995 |
| WO 9946979 A1 | 23-09-1999 | US | 6019063 A | 01-02-2000 |
| | | WO | 9946979 A1 | 23-09-1999 |

EPO FORM P0461

Für nähere Einzelheiten zu diesem Anhang : siehe Amtsblatt des Europäischen Patentamts, Nr.12/82